# EUROPEAN PATENT APPLICATION

(11) **EP 4 718 383 A1**
(43) Date of publication of application: **01.04.2026**
(21) Application number: 25203739.5
(22) Date of filing: 22.09.2025
(51) Int. Cl.: G06T 17/00

(54) **GAUSSIAN SPLATS FOR USER REPRESENTATIONS**

(30) Priority: 27.09.2024 US 202463699979 P; 17.09.2025 US 202519331351
(71) Applicant: Apple Inc., Cupertino, CA 95014 (US)
(72) Inventor: KAUFMANN, Peter, Cupertino, 95014 (US); AMBERG, Brian, Cupertino, 95014 (US); RÜEGG, Jan, Cupertino, 95014 (US); MARTIN, Sebastian, Cupertino, 95014 (US); NTAVELIS, Evangelos, Cupertino, 95014 (US); MANINCHEDDA, Fabio, Cupertino, 95014 (US); BRUGGER, Stefan, Cupertino, 95014 (US)
(74) Representative: COPA Copenhagen Patents

(57) **Abstract**

Various implementations disclosed herein include devices, systems, and methods that generate a user representation based on splat parameter data. For example, a process may include obtaining user representation data of at least a portion of a user. The user representation data may be based on a first set of sensor data including two-dimensional images of the user obtained during an enrollment process and the user representation data includes splat parameter data corresponding to a plurality of three-dimensional (3D) positions. The process may further include modifying the user representation data based on a second set of sensor data obtained after the enrollment process. The process may further include providing a view of a user representation based on the modified user representation data, wherein providing the view comprises generating a plurality of splats based on the splat parameter data of the modified user representation data.

## Description

### TECHNICAL FIELD

The present disclosure generally relates to electronic devices, and in particular, to systems, methods, and devices for representing users in computer-generated content.

### BACKGROUND

Existing techniques may not accurately or honestly present current (e.g., real-time) representations of the appearances of users of electronic devices. For example, a device may provide a representation of a user based on images of the user's face that were obtained minutes, hours, days, or even years before. Such a representation may not accurately represent the user's appearance. Thus, it may be desirable to provide a means of efficiently providing more accurate, honest, and/or current representations of users.

### SUMMARY

Various implementations disclosed herein include devices, systems, and methods that generate a view of a user representation based on three-dimensional (3D) Gaussian splatting. Gaussian Splatting enables real-time rendering of high-quality, photorealistic scenes from a sparse set of images. In particular, a first set of captured user data (e.g., enrollment data) may be used to generate user representation data including splat parameter data (e.g., a 23 channel Gaussian UV map) at a first device (e.g., a sending device). The user representation data may be modified based on live user data. The view of the user representation may be provided to a viewing device (e.g., rendering a live view of a sender's persona) by generating splats corresponding to modified user representation data. A persona is a representation of a user, like an avatar. Advantageously, splatting avoids the need to use a mesh to avoid the appearance of holes and provides other advantages. The 3D representations of the user at multiple instants in time may be generated on a viewing device that combines the data and uses the combined data to render views, for example, during a live communication (e.g., a virtual communication or a co-presence) session.

In some implementations, data associated with each splat of a user representation may represent a texture/color, a position, a splat shape, a level of transparency, a covariance (e.g., how a splat is stretched/scaled), semantics (e.g., hair, mouth, skin, glasses, accessories, and/or other features), and the like. The splats may be arranged in a two-dimensional (2D) grid structure corresponding to a parameterization of the surface. The parameterization may correspond to a person's face for high quality face reconstructions. The parameterization of the splat distribution provides higher quality data, may be faster to train a machine learning model, and may provide faster (e.g., real-time) rasterization. In some implementations, 3D mapping information (e.g., identifying x,y,z positions corresponding to UV coordinates of a UV map) may be generated at enrollment (e.g., Gaussian UV maps).

Several advantages may be realized using 3D Gaussian splats and UV mapping. For example, 3D Gaussian splats may require less computation, resources, and bandwidth than using a 3D mesh, a 3D point cloud, and the like, while enabling a more accurate user representation.

In general, one innovative aspect of the subject matter described in this specification can be embodied in methods that include the actions of, at a processor of a device, obtaining user representation data of at least a portion of a user, wherein the user representation data is based on a first set of sensor data comprising images of the user obtained during an enrollment process and the user representation data comprises splat parameter data corresponding to a plurality of three-dimensional (3D) positions, modifying the user representation data based on a second set of sensor data obtained after the enrollment process, and providing a view of a user representation based on the modified user representation data, wherein providing the view comprises generating a plurality of splats based on the splat parameter data of the modified user representation data.

These and other embodiments can each optionally include one or more of the following features.

In some aspects, the at least the portion of the user comprises a face portion and an additional portion of the user. In some aspects, the user representation data is based on UV maps and 3D point cloud points associated with distribution data defining sizes and shapes for rendering the 3D point cloud points as splats corresponding to each point of the UV maps.

In some aspects, the splat parameter data comprises 3D Gaussian parameters for each 3D position. In some aspects, the 3D Gaussian parameters comprises at least one of position information, color information, covariance information, transparency information, an orientation, opacity information, extent information in each axis, rotation data, a scale, and semantic information.

In some aspects, the user representation data comprises 3D mapping information that includes feature values and position information for each map point. In some aspects, the user representation data is modified based on body pose data obtained during the enrollment process, during a communication session with another device, or a combination thereof.

In some aspects, the device is a viewer's device, wherein the user representation data is modified based on an additional set of sensor data obtained during a communication session with a sender's device associated with the user representation.

In some aspects, the user representation data is generated and updated during the enrollment process based on images of a face of the user captured while the user is expressing a plurality of different facial expressions.

In some aspects, a technique generates the user representation data via a machine learning model trained using training data obtained via one or more sensors in one or more environments.

In some aspects, providing the view of the user representation based on the modified user representation data comprises displaying the user representation an extended reality (XR) environment.

In some aspects, the actions further include modifying the view of the user representation by adjusting the user representation based on at least one color attribute of a plurality of color attributes of an environment, at least one light attribute of a plurality of light attributes of the environment, or a combination thereof. In some aspects,

In some aspects, the user representation data is obtained in a first physical environment, and the user representation is displayed in a view of a second physical environment that is different than the first physical environment. In some aspects, the user representations is a 3D user representation.

In accordance with some implementations, a non-transitory computer readable storage medium has stored therein instructions that are computer-executable to perform or cause performance of any of the methods described herein. In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates a device obtaining sensor data from a user according to some implementations.
Figure 2 illustrates exemplary electronic devices operating in different physical environments during a communication session of a first user at a first device and a second user at a second device with a view of a combined 3D representation of the second user for the first device in accordance with some implementations.
Figures 3A-3D illustrate examples of 3D Gaussian splats for use with generating views of 3D representations in accordance with some implementations.
Figure 4 illustrates an example of generating and displaying a stereo view of splats on a device in accordance with some implementations.
Figure 5 illustrates an example of generating a representation of a user based on rendering splat parameter data in accordance with some implementations.
Figures 6A-6C illustrate an example of generating a representation of a user based on rendering splat parameter data in accordance with some implementations.
Figure 7 is a flowchart representation of a method for providing a view of a user representation based on rendering splat parameter data in accordance with some implementations.
Figure 8 is a block diagram illustrating device components of an exemplary device according to some implementations.
Figure 9 is a block diagram of an example head-mounted device (HMD) in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects or variants do not include all of the specific details described herein. Moreover, well-known systems, methods, components, devices and circuits have not been described in exhaustive detail so as not to obscure more pertinent aspects of the example implementations described herein.

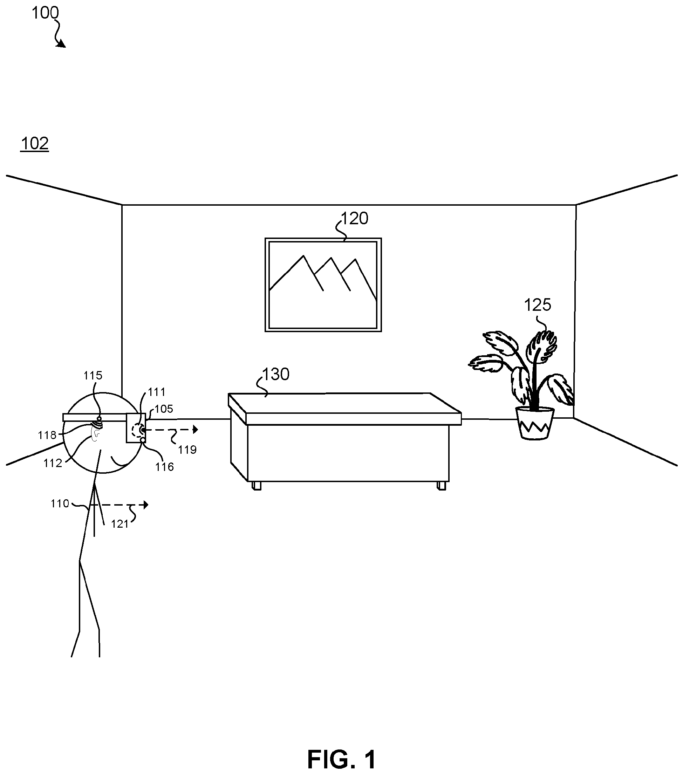

**Figure 1** illustrates an example environment 100 of exemplary electronic device 105, operating in a physical environment 102. In some implementations, electronic devices 105 may be able to share information with one another or an intermediary device such as an information system. Additionally, physical environment 102 includes user 110 wearing device 105. In some implementations, the device 105 is configured to present views of an extended reality (XR) environment, which may be based on the physical environment 102, and/or include added content such as virtual elements providing text narrations.

In the example of Figure 1, the physical environment 102 is a room that includes physical objects such as wall hanging 120, plant 125, and desk 130. The electronic device 105 may include one or more cameras, microphones, depth sensors, motion sensors, or other sensors that can be used to capture information about and evaluate the physical environment 102 and the objects within it, as well as information about user 110.

In the example of Figure 1, the device 105 includes one or more sensors 116 that capture light-intensity images, depth sensor images, audio data or other information about the user 110 (e.g., internally facing sensors and externally facing cameras). For example, the one or more sensors 116 may capture images of the user's (e.g., user 110) forehead, eyebrows, eyes, eye lids, cheeks, nose, lips, chin, face, head, hands, wrists, arms, shoulders, torso, legs, or other body portion. Additionally, the one or more sensors 116 may capture images of elements/materials that are connected to or worn by the user 110, e.g., glasses, earrings, and/or other accessories. For example, internally facing sensors may see what's inside of the device 105 (e.g., the user's eyes and around the eye area), and other external cameras may capture the user's face outside of the device 105 (e.g., egocentric cameras that point toward the user 110 outside of the device 105). Sensor data about a user's eye 111, as one example, may be indicative of various user characteristics, e.g., the user's gaze direction 119 over time, user saccadic behavior over time, user eye dilation behavior over time, etc. The one or more sensors 116 may capture audio information including the user's speech and other user-made sounds as well as sounds within the physical environment 100.

In some implementations, the device 105 includes an eye tracking system for detecting eye position and eye movements via eye gaze characteristic data. For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user 110. Moreover, the illumination source of the device 105 may emit NIR light to illuminate the eyes of the user 110 and the NIR camera may capture images of the eyes of the user 110. In some implementations, images captured by the eye tracking system may be analyzed to detect position and movements of the eyes of the user 110, or to detect other information about the eyes such as color, shape, state (e.g., wide open, squinting, etc.), pupil dilation, or pupil diameter. Moreover, the point of gaze estimated from the eye tracking images may enable gaze-based interaction with content shown on the near-eye display of the device 105.

Additionally, the one or more sensors 116 may capture images of the physical environment 100 (e.g., externally facing sensors). For example, the one or more sensors 116 may capture images of the physical environment 100 that includes physical objects such as wall hanging 120, plant 125, and desk 130. Moreover, the one or more sensors 116 may capture images (e.g., light intensity images and/or depth data)

One or more sensors, such as one or more sensors 115 on device 105, may identify user information based on proximity or contact with a portion of the user 110. As example, the one or more sensors 115 may capture sensor data that may provide biological information relating to a user's cardiovascular state (e.g., pulse), body temperature, breathing rate, etc.

The one or more sensors 116 or the one or more sensors 115 may capture data from which a user orientation 121 within the physical environment can be determined. In this example, the user orientation 121 corresponds to a direction that a torso of the user 110 is facing.

Some implementations disclosed herein determine a user understanding based on sensor data obtained by a user worn device, such as first device 105. Such a user understanding may be indicative of a user state that is associated with providing user assistance. In some example, a user's appearance or behavior or an understanding of the environment may be used to recognize a need or desire for assistance so that such assistance can be made available to the user. For example, based on determining such a user state, augmentations may be provided to assist the user by enhancing or supplementing the user's abilities, e.g., providing guidance or other information about an environment to disabled/impaired person.

Content may be visible, e.g., displayed on a display of device 105, or audible, e.g., produced as audio 118 by a speaker of device 105. In the case of audio content, the audio 118 may be produced in a manner such that only user 110 is likely to hear the audio 118, e.g., via a speaker proximate the ear 112 of the user or at a volume below a threshold such that nearby persons are unlikely to hear. In some implementations, the audio mode (e.g., volume), is determined based on determining whether other persons are within a threshold distance or based on how close other persons are with respect to the user 110.

In some implementations, the content provided by the device 105 and sensor features of device 105 may be provided using components, sensors, or software modules that are sufficiently small in size and efficient with respect to power consumption and usage to fit and otherwise be used in lightweight, battery-powered, wearable products such as wireless ear buds or other ear-mounted devices or head mounted devices (HMDs) such as smart/augmented reality (AR) glasses. Features can be facilitated using a combination of multiple devices. For example, a smart phone (connected wirelessly and interoperating with wearable device(s)) may provide computational resources, connections to cloud or internet services, location services, etc.

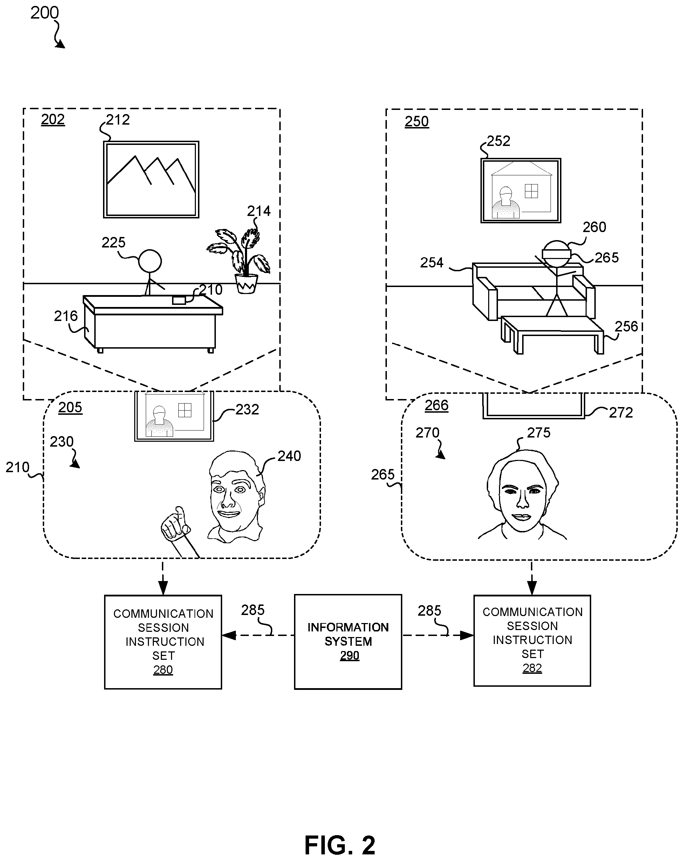

**Figure 2** illustrates exemplary electronic devices operating in different physical environments during a communication session of a first user at a first device and a second user at a second device with a view of a 3D representation of the second user for the first device in accordance with some implementations. In particular, Figure 2 illustrates exemplary operating environment 200 of electronic devices 210, 265 operating in different physical environments 202, 250, respectively, during a communication session, e.g., while the electronic devices 210, 265 are sharing information with one another or an intermediary device such as a communication session system/server. In this example of Figure 2, the physical environment 202 is a room that includes a wall hanging 212, a plant 214, and a desk 216 (e.g., physical environment 102 of Figure 1). The electronic device 210 includes one or more cameras, microphones, depth sensors, or other sensors that can be used to capture information about and evaluate the physical environment 202 and the objects within it, as well as information about the user 225 of the electronic device 210 (e.g., a handheld device). The information about the physical environment 202 and/or user 225 may be used to provide visual content (e.g., for user representations) and audio content (e.g., for audible voice or text transcription) during the communication session. For example, a communication session may provide views to one or more participants (e.g., users 225, 260) of a 3D environment that is generated based on camera images and/or depth camera images of the physical environment 202, a representation of user 225 based on camera images and/or depth camera images of the user 225.

Additionally, in this example of Figure 2, the physical environment 250 is a room that includes a wall hanging 252, a sofa 254, and a coffee table 256. The electronic device 265 includes one or more cameras, microphones, depth sensors, or other sensors that can be used to capture information about and evaluate the physical environment 250 and the objects within it, as well as information about the user 260 of the electronic device 265 (e.g., a user worn device or HMD device, such as device 105). The information about the physical environment 250 and/or user 260 may be used to provide visual and audio content during the communication session. For example, a communication session may provide views of a 3D environment that is generated based on camera images and/or depth camera images (from electronic device 265) of the physical environment 250 as well as a representation of user 260 based on camera images and/or depth camera images (from electronic device 265) of the user 260. For example, a 3D environment may be sent by the device 210 by a communication session instruction set 280 in communication with the device 265 by a communication session instruction set 282 (e.g., via the information system 290 via network connection 285). The information system 290 may orchestrate the encryption/decryption and pre-downloading of an asset (e.g., 3D asset data, such as data associated with user representations 240, 275) between two or more devices (e.g., electronic devices 210 and 265).

Figure 2 illustrates an example of a view 205 of a virtual environment (e.g., 3D environment 230) at device 210, where a representation 232 of the wall hanging 252 and a user representation 240 is provided (e.g., a persona of user 260), provided there is a consent to view the users' representations of each user during a particular communication session. In particular, the user representation 240 of user 260 is generated based on one or more user representation techniques for a more realistic persona generated in real time. The generation of user representations is further discussed herein.

Additionally, the electronic device 265 within physical environment 250 provides a view 266 that enables user 260 to view representation 272 of the wall hanging 212 and a representation 275 (e.g., a persona) of at least a portion of the user 225 (e.g., from mid-torso up) within the 3D environment 270. In other words, the user representation 240 of user 260 is generated at device 210 by generating combined 3D representations of the user 260 for the multiple instants in a period of time based on data obtained from device 265 (e.g., a frame-specific 3D representation of user 260). Alternatively, in some embodiments, user representation 240 of user 260 is generated at device 265 (e.g., sending device of a speaker) and sent to device 210 (e.g., viewing device to view a persona of the speaker). In some embodiments, each of the 3D representations 240 of user 260 and 275 of user 225 is generated by generating splats corresponding to modified user representation data according to techniques described herein.

In the example of Figure 2, the electronic device 210 is illustrated as hand-held device and electronic device 265 is illustrated as a head-mounted device (HMD). However, either of the electronic devices 210 and 265 may be a mobile phone, a tablet, a laptop, so forth, or like electronic device 265, may be worn by a user (e.g., head-worn device (glasses), headphones, an ear mounted device, and so forth). In some implementations, functions of the devices 210 and 265 are accomplished via two or more devices, for example a mobile device and base station or a head mounted device and an ear mounted device. Various capabilities may be distributed amongst multiple device, including, but not limited to power capabilities, CPU capabilities, GPU capabilities, storage capabilities, memory capabilities, visual content display capabilities, audio content production capabilities, and the like. The multiple devices that may be used to accomplish the functions of electronic devices 210 and 265 may communicate with one another via wired or wireless communications. In some implementations, each device communicates with a separate controller or server to manage and coordinate an experience for the user (e.g., a communication session server). Such a controller or server may be located in or maybe remote relative to the physical environment 202 and/or physical environment 250.

Additionally, in the example of Figure 2, the 3D environments 230 and 270 are XR environments that are based on a common coordinate system that can be shared with other users (e.g., a virtual room for personas for a multi-person communication session). In other words, the common coordinate system of the 3D environments 230 and 270 are different than the coordinate system of the physical environments 202 and 250, respectively. For example, a common reference point may be used to align the coordinate systems. In some implementations, the common reference point may be a virtual object within the 3D environment that each user can visualize within their respective views. For example, a common center piece table that the user representations (e.g., the user's personas) are positioned around within the 3D environment. Alternatively, the common reference point is not visible within each view. For example, a common coordinate system of a 3D environment may use a common reference point for positioning each respective user representation (e.g., around a table/desk). Thus, if the common reference point is visible, then each view of the device would be able to visualize the "center" of the 3D environment for perspective when viewing other user representations. The visualization of the common reference point may become more relevant with a multi-user communication session such that each user's view can add perspective to the location of each other user during the communication session.

In some implementations, the representations of each user may be realistic or unrealistic and/or may represent a current and/or prior appearance of a user. For example, a photorealistic representation of the user 225 or 260 may be generated based on a combination of live images and prior images of the user. The prior images may be used to generate portions of the representation for which live image data is not available (e.g., portions of a user's face that are not in view of a camera or sensor of the electronic device 210 or 265 or that may be obscured, for example, by a headset or otherwise). In one example, the electronic devices 210 and 265 are HMDs and live image data of the user's face includes a downward facing camera that obtains images of the user's cheeks and mouth and inward facing camera images of the user's eyes, which may be combined with prior image data of the user's other portions of the user's face, head, and torso that cannot be currently observed from the sensors of the device. Prior data regarding a user's appearance may be obtained at an earlier time during the communication session, during a prior use of the electronic device, during an enrollment process used to obtain sensor data of the user's appearance from multiple perspectives and/or conditions, or otherwise.

In some implementations, generating one or more user representations for a communication session as illustrated in Figure 2 (e.g., generating user representation 240, 275), may be based on one more rendering techniques, such as using a 3D mesh or a 3D point cloud. However, techniques described herein utilize a 3D gaussian splat rendering approach using UV mapping. Several advantages may be realized using a simple set of values with depth values defined relative to multiple points as expressed by 3D Gaussian splats using UV mapping. The set of values may require less computation and bandwidth than using a 3D mesh or 3D point cloud, while enabling a more accurate user representation than an RGBDA image. Moreover, the set of values may be formatted/packaged in a way that is similar to existing formats, e.g., RGBDA images, which may enable more efficient integration with systems that are based on such formats.

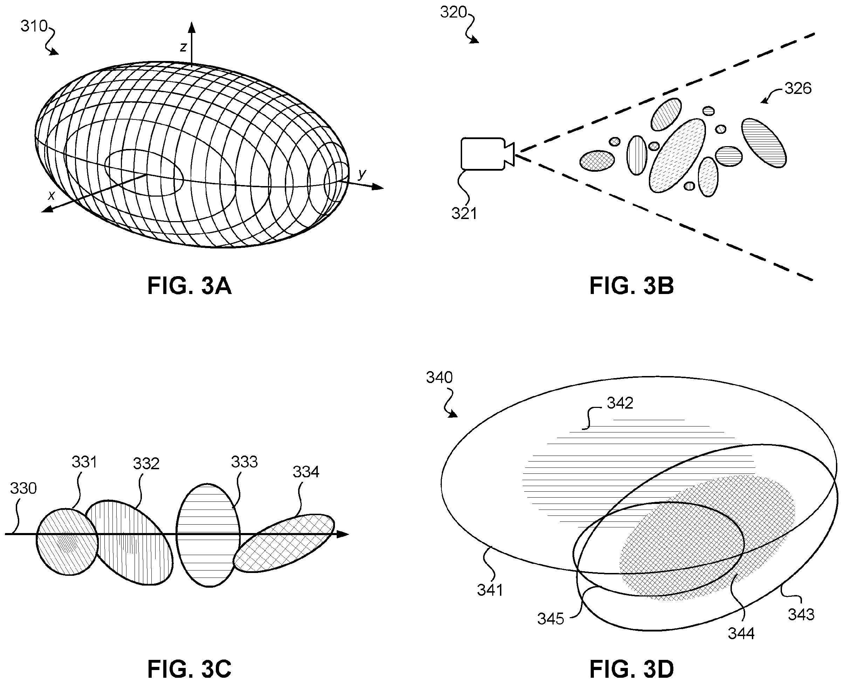

**Figures 3A-3D** illustrate examples of 3D Gaussian splats for use with generating views of 3D representations in accordance with some implementations. For example, 3D Gaussian Splatting (3DGS) may be used for 3D modeling to represent complex scenes as a combination of a large number of colored 3D Gaussians which are rendered into camera views via splatting-based rasterization. The positions, sizes, rotations, colors and opacities of these Gaussian splats can then be adjusted via differentiable rendering and gradient-based optimization such that they represent the 3D scene given by a set of input images.

Figure 3A illustrates a 3D Gaussian splat 310, e.g., an ellipsoid shape formed by a 3D gaussian distribution. The 3D Gaussian splat 310 may be used to represent a position (*µ*), such as xyz coordinates. The 3D Gaussian splat 310 may further represent rotation and scale (e.g., *Σ*: covariance matrix), opacity (*α*), color (e.g., RGB values), anisotropic covariance, spherical harmonic (SH) coefficients, and/or a semantic class (e.g., glasses, accessories, etc.). Figure 3B illustrates an environment 320 for rendering splats 326 based on a visibility direction of a camera 321. Figure 3C illustrates ordering the splats along a camera viewpoint direction along a ray 330 (e.g., the splats 331, 332, 333, 334 are identified and ordered along the ray 330). For example, Gaussian splatting is a technique where individual 3D points are represented as Gaussian distributions (like "splats") with color values that change depending on the viewing angle, using spherical harmonics to model this view-dependent color variation and enables real-time rendering of high-quality, photorealistic scenes from a sparse set of images. For example, each point has a color that is calculated based on its position relative to the camera, allowing for realistic shading effects across different viewpoints. Figure 3D illustrates an environment 340 for blending splats 341, 342, 343, 344, 345 that may be viewed along the ray 330 direction from the camera viewpoint by composing the splats 331, 332, 333, 334 on an image plane. Some implementations may use screen-to-splats (e.g., similar to ray-casting techniques), splats-to-screen (e.g., similar to projection techniques), a combination thereof, or other techniques for composing splats.

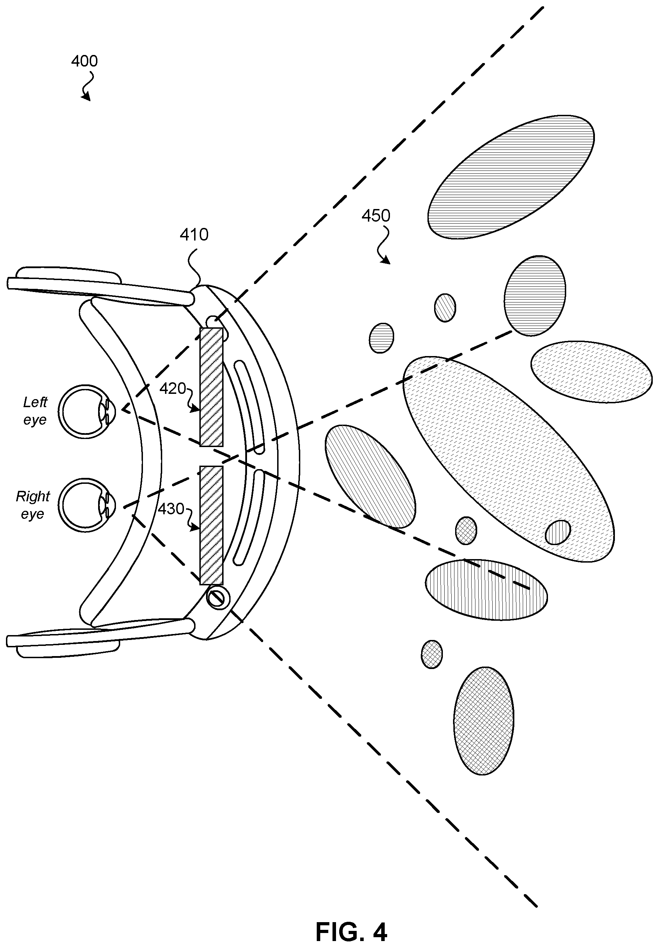

**Figure 4** illustrates an example environment 400 for generating and displaying a stereo view of splats on a device (e.g., an HMD) in accordance with some implementations. For example, the device 410 is an HMD that includes a first display 420 for a left eye view and a second display 430 for a right eye view. The first display 420 and the second display 430 may then view the rendered splats 450 for each respective viewpoint accordingly. In some implementations, the generated images for each viewpoint may be rendered as a single mono image (e.g., render for one eye), or the images may be presented as a stereo view, as illustrated in Figure 4. Additionally, or alternatively, in some implementations, the generated images for each viewpoint may be rendered as a single grid mesh, or a combination of stereo grid meshes.

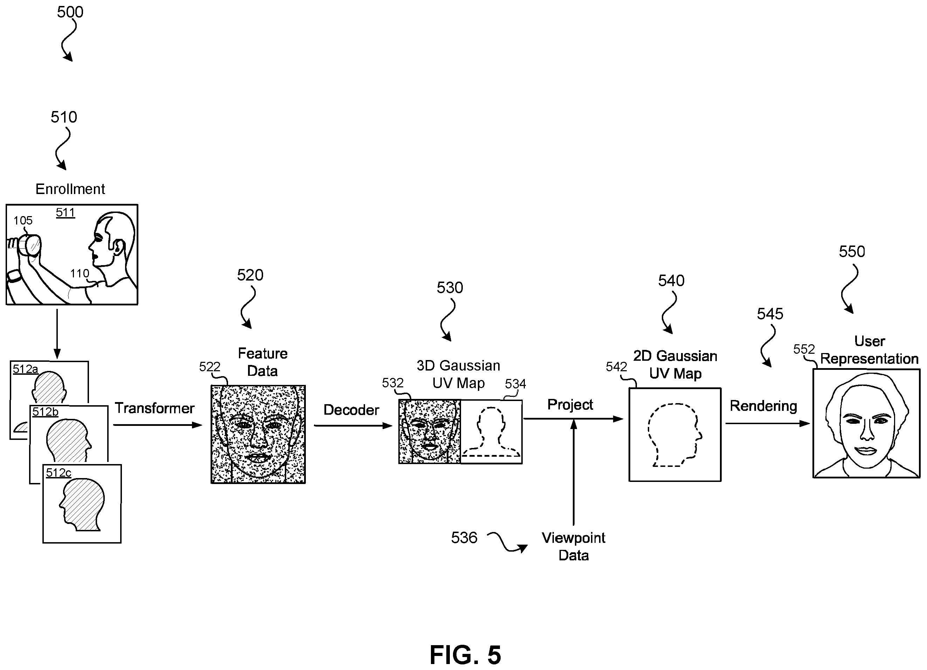

**Figure 5** illustrates an example of generating a representation of a user (e.g., a persona) based on rendering splat parameter data in accordance with some implementations. In particular, Figure 5 illustrates an example user representation process 500 for obtaining enrollment data from an enrollment process 510 (e.g., enrollment images 512a,b,c) from a sending device for a sender and a viewpoint at a receiving device for a viewer to generate a view 550 of a user representation 552 (e.g., a persona) using a Gaussian splatting technique.

Enrollment process 510 illustrates images of a user (e.g., user 110 of Figure 1) during an enrollment process. An enrollment process 510 may include a user enrollment registration (e.g., preregistration of enrollment data) and obtaining sensor data (e.g., live data enrollment). In some implementations, the user enrollment registration, as illustrated in image 511, may include a user (e.g., user 110), obtaining a full view image of his or her face and part of his or her upper body using external sensors on the device 105, and therefore, would the user may take off and orient the device 105 (e.g., an HMD) towards his or her face/body during an enrollment process. The enrollment personification may be generated as the system obtains image data (e.g., RGB images) of the user's face while the user is providing different facial expressions. For example, the user may be told to "raise your eyebrows," "smile," "frown," etc., in order to provide the system with a range of facial features for an enrollment process. An enrollment personification preview may be shown to the user while the user is providing the enrollment images to get a visualization of the status of the enrollment process. The enrollment image data 510 may include an enrollment personification with different user expressions and from different viewpoints (e.g., a front view in enrollment image 512a, a right side view in enrollment image 512b, and a left side view in enrollment image 512c). In some examples, more or less different expressions and/or viewpoints may be utilized to acquire sufficient data for the enrollment process. In some implementations, at a final stage of enrollment, the user may be presented with selection options to be used for generating a user representation, such as light induced/color corrections, adding/removing accessories, and the like (e.g., a user can choose their best identity to be represented as their persona/persona).

In some implementations, a transformation of the enrollment image data to feature data 522 may occur by transforming (e.g., via a transformer) as part of a feature data process 520 for the multiple expressions (e.g., different sets of feature data for different expressions). For example, feature data 522 may include learned feature information of the user 110 obtained from the enrollment images, such as skin, color, and other semantic information per pixel. The feature data 522 may include a list of positions for each feature value (e.g., multiple feature channels). The feature data 522 may then be decoded by a decoder to generate a 3D Gaussian UV map for each feature as part of the Gaussian UV map process 530. The 3D points of the feature data 532 may be mapped to Gaussian parameters of the UV map 534 (e.g., 3D points + Gaussian parameters). For example, a UV map stores the x,y,z positions for the splat parameters (e.g., color (view dependent/ harmonics info), covariance, alpha/transparency, orientation, opacity, extent in each axis, rotation, scale, semantic information (e.g., skin, hair, cheek, nose, lips, eyebrow, accessories, etc.). In other words, the Gaussian UV map process 530 may obtain 3D point information that includes sufficient information that which splat generation can be generated (e.g., 3D vector projections).

In some implementations, the process 500 proceeds after generating the 3D Gaussian UV Map data from the Gaussian UV map process 530 (e.g., at a sender's device after enrollment), the system (e.g., at viewer's device) may obtain the 3D Gaussian UV Map data (e.g., the feature data 532 mapped to Gaussian parameters via a UV map 534) and project the Gaussian data using a current viewpoint (e.g., viewpoint data 536) to determine a 2D Gaussian UV map 542 (e.g., 2D points + Gaussian parameters) for the Gaussian UV map process 540. Then Gaussian splatting may be used for the rendering 545 to generate a view of the user representation 552 for the user representation generation process 550. For example, a 3D Gaussian splatting technique uses the 2D points from the UV map and the associated Gaussian parameters to render an image using Gaussian splatting based on the current viewpoint of the viewer (e.g., viewpoint data 536).

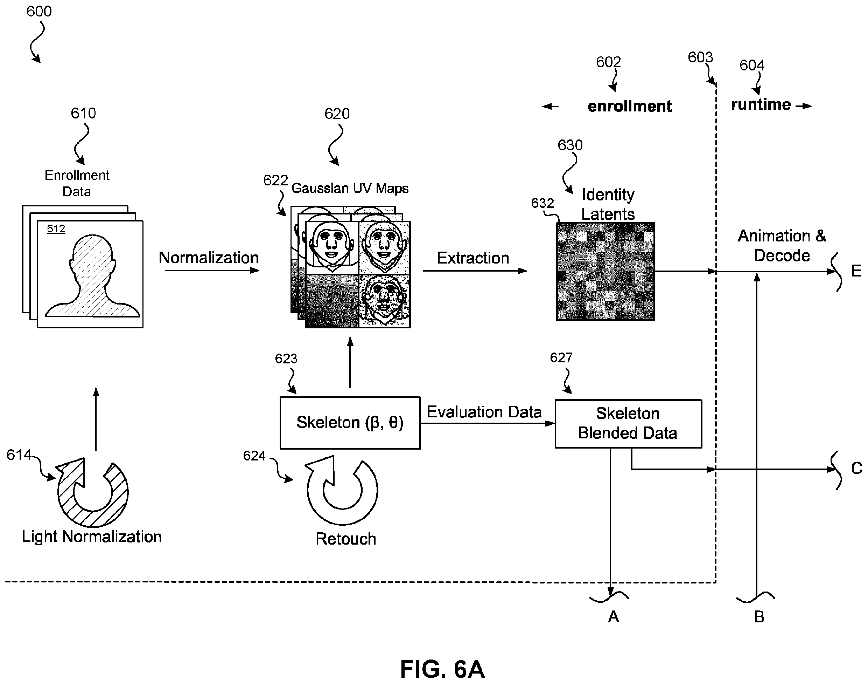

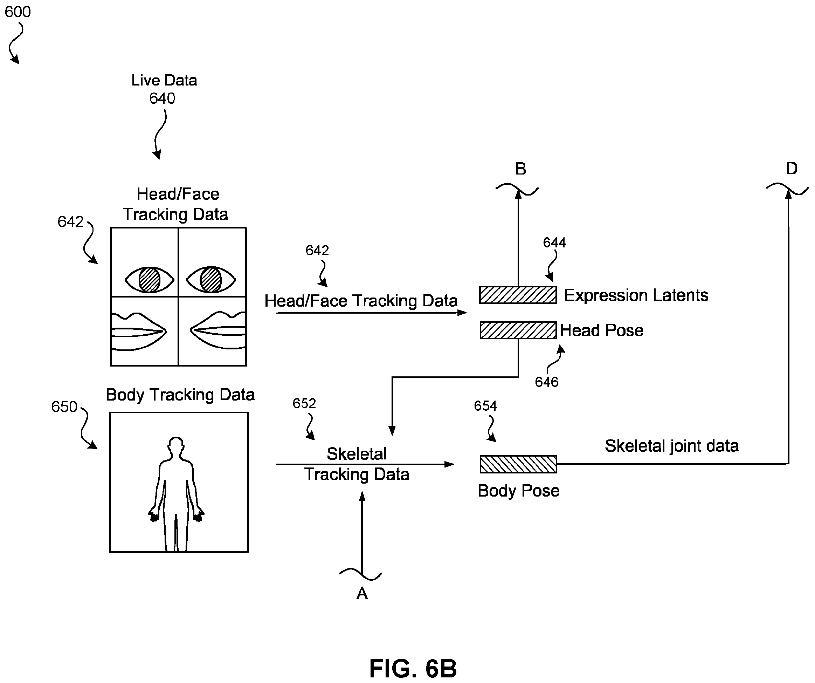

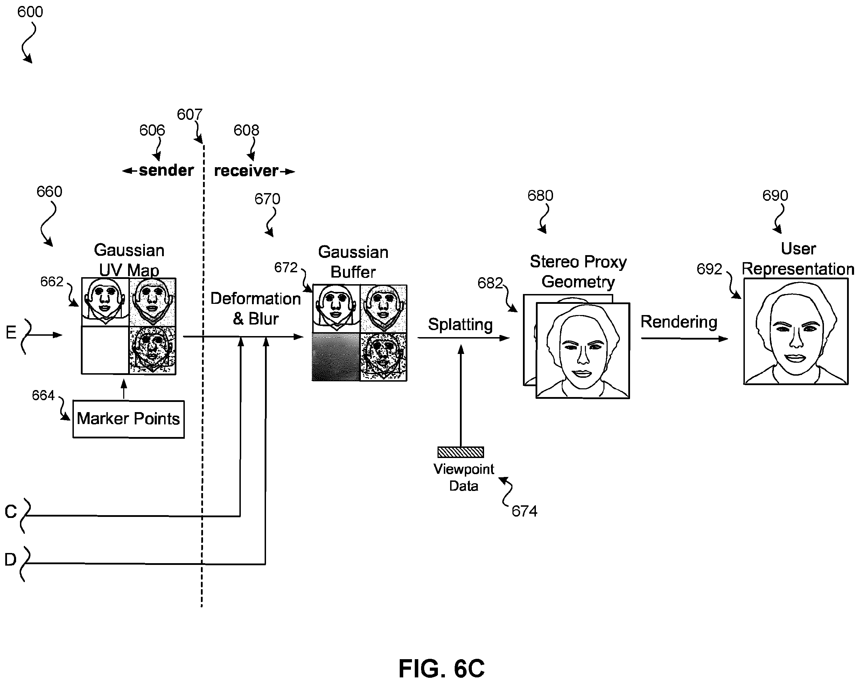

**Figures 6A-6C** illustrate an example of generating a representation of a user (e.g., a persona) based on rendering splat parameter data in accordance with some implementations. In particular, Figure 6 illustrates an example process 600 for obtaining Gaussian UV map data from a sending device from a sender based on a viewpoint at a receiving device for a viewer in order to generate a view 550 of a user representation 552 (e.g., a persona) associated with the sender using a Gaussian splatting technique. The example rendering process 600 based on splat parameter data illustrates an enrollment phase 602 and a runtime phase 604 as divided by the timeline mark 603 as illustrated in Figure 6A. In other words, the enrollment phase 602 may occur at some point in time before a communication session, and every other process after the timeline mark 603 for the runtime phase 604 occurs during a live communication session (e.g., generating a live persona of the user of the sending device to the user at a viewing device). Moreover, the example rendering process 600 illustrates a data flow process between the sending device (e.g., sender phase 606) and the receiving device (e.g., receiver phase 608) as illustrated by the send/receive timeline mark 607, as illustrated in Figure 6C.

In an exemplary implementation, the process 600 starts at an enrollment phase 602. The enrollment phase 602 may include an offline enrollment process, where an identity representation of a user may be generated. The identity representation may be a set of latents extracted from a Gaussian UV map, some type of canonical representation (e.g., a canonical (or base) Gaussian UV map) that may be generated for each user, or a combination thereof.

In an exemplary implementation, the enrollment phase 602 may begin with the enrollment process 610, which illustrates images of a user (e.g., user 110 of Figure 1) that are captured during at enrollment. An enrollment process 610 may include a user enrollment registration (e.g., preregistration of enrollment data) and obtaining sensor data (e.g., live data enrollment) to capture enrollment images 612. The user enrollment registration, as illustrated in image 511 of Figure 5, may include a user (e.g., user 110), obtaining a full view image of his or her face using external sensors on the device 105, and therefore, would take off and orient the device 105 (e.g., an HMD) towards his or her face during an enrollment process. The enrollment personification may be generated as the system obtains image data (e.g., RGB images) of the user's face while the user is providing different facial expressions. For example, the user may be told to "raise your eyebrows," "smile," "frown," etc., in order to provide the system with a range of facial features for an enrollment process. An enrollment personification preview may be shown to the user while the user is providing the enrollment images to get a visualization of the status of the enrollment process. The enrollment image data may include an enrollment personification with different user expressions and from different viewpoints.

In some implementations, a light normalization process 614 may be applied to the enrollment data. For example, a light normalization process 614 may be provided that obtains a cropped image of the enrollment images 612 (e.g., a segmented head or face of a user) that illustrates a poor lighting condition as shown at the face of the user. The light normalization process 614 can detect one or more attributes associated with the poor lighting condition and adjust the one or more enrollment images accordingly. The adjustments may then be applied to generate one or more post-process enrollment images, which illustrates the removal of the attributes associated with the poor lighting conditions at the face of the user. For example, the enrollment images 612 may have been too dark, so the light normalization process 614 may lighten the face area of the user, and the post-processing can apply the lightened face area to the entire post-processed enrollment image data.

In some implementations, after the enrollment images are normalized, the enrollment phase 602 of proceeds to the Gaussian UV map process 620 to generate the 3D Gaussian UV Map data 622. For example, a transformation of the enrollment image data to feature data may occur by transforming (e.g., via a transformer) as part of a feature data process. For example, feature data may include learned feature information of the user 110 obtained from the enrollment images 612, such as skin, color, and other semantic information per pixel. The feature data may include a list of positions for each feature value (e.g., 14 feature channels). The feature data may then be decoded by a decoder to generate 3D Gaussian UV map data 622 for each feature as part of the Gaussian UV map process 620. The 3D points of the feature data may be mapped to Gaussian parameters of a UV map (e.g., 3D points + Gaussian parameters). For example, a UV map may store the x,y,z positions for the splat parameters (e.g., color (view dependent/ harmonics info), covariance, alpha/transparency, orientation, opacity, extent in each axis, rotation, scale, semantic information (e.g., skin, hair, cheek, nose, lips, eyebrow, etc.).

In some implementations, the Gaussian UV map process 620 may generate a canonical representation of the user, such as a canonical Gaussian UV map. The canonical Gaussian UV map may be synthesized from multiple enrollment expressions and may serve as a stable, personalized reference for subsequent real-time updates. In some implementations, the canonical representation may be a neutral expression, an average, or an idealized synthesis, and may be stored and used as a starting point for runtime animation. In the runtime phase 604, the live feature latents (expression latents) may be used to compute a delta or modification that is applied to the canonical Gaussian UV map, resulting in the final, frame-specific user representation.

In some implementations, the Gaussian UV map process 620 may also obtain additional feature data associated with a body of a user (e.g., body tracking information 623). The body tracking information 623 may include one or more portions of the body of a user other than the face (e.g., head, hands, upper/lower torso, etc.). The body tracking information 623 may be separated into different data streams based on tracking different portions of the body, such as, *inter alia,* the head/face as one data stream, hands as another data stream, and the upper and/or lower torso as another data stream. In some implementations, body tracking information 623 may be retouched via a retouch process 624 which provides the system the ability to update the skeleton model of the body tracking information 623 (e.g., fine tuning). For example, the retouch process 624 may be applied to the Gaussian UV maps directly by changing splat parameters to achieve a specific goal, such as, *inter alia,* to remove blemishes on the skin, to change a hair color, to slightly change the shape of the nose, and/or any other deformation that involves color, shape, and/or appearance. The body tracking information 623 during enrollment may further send the retouched evaluation body data as skeleton blended data 627 (e.g., blended weights and asset data), that can be further analyzed at another stage in the process, such as, *inter alia,* deformation and blurring of the Gaussian UV maps and for skeletal tracking during the runtime phase 604.

The identity latent process 630 may obtain the extracted 3D Gaussian UV map data 622 from the Gaussian UV map process 620. For example, the identity latent process 630 may generate a map of identity latents 632 that can be used as marker points, e.g., semantic points of a user that can be determined at enrollment that are likely to move during animation frame-to-frame, so those points are updated at runtime (e.g., mouth corner, other features, etc.). In other words, the Gaussian UV map process 620 and the identity latent process 630 may determine 3D point information that includes sufficient information that which splat generation can be generated (e.g., 3D vector projections) and identifies the portions of the user that may need to be updated frame-to-frame (e.g., marker points 664) identified by the identity latent process 630. In other words, the "marker points" refer to semantic or feature points (e.g., facial landmarks, corners of the mouth, nose tip, etc.) that are tracked and updated during runtime.

The enrollment phase 602 may then store these enrollment assets such as the map of identity latents 632 and the skeleton blended data 627 for future use during the runtime phase 604 (e.g., such as during a communication session with another device). At the runtime phase 604 (e.g., a communication session with another device has been initiated), the exemplary process 600 proceeds to capture live data at the live data process 640, as shown in Figure 6B. In particular, the live data process 640 captures head/face tracking data 642 and body tracking data 650 (e.g., real-time sensor data for the user to update the user representation). The head/face tracking data 642 may be used to identify expression latents 644 and head pose data 646 (e.g., HMD-to-Head pose information). The expression latents 644 may be used for the animation and decoding process with the identity latents 632 for updating the Gaussian UV map data 622 with the current ("live") facial expressions of the user (e.g., animated facial expressions).

In some implementations, skeletal tracking data 652 may be determined based on the current ("live") sensor data (e.g., body tracking data 650), and the skeleton blended data 627 obtained from the enrollment phase 602. The head pose data 646 may be used to update the skeletal tracking data 652 (e.g., update the data associated with the head of the sender based on the device pose data). The skeletal tracking data 652 may then be used by a body pose process 654 to identify skeletal joint data associated with multiple skeletal joints (quantized) of the sender. The skeletal joint data may be used for the animation and decoding process with the identity latents 632 for updating the Gaussian UV map data 622 with the current ("live") skeletal movements of the user (e.g., animated body pose). In some implementations, the body tracking information may be sent to a decoder network to estimate a complex body deformation.

The final stage of the runtime phase 604 for a sending device (e.g., sender phase 606) is the animation and decoding processes for the Gaussian UV map process 660, as shown in Figure 6C. At the Gaussian UV map process 660, the Gaussian UV map data 622 and the identity latents 632 are animated and decoded with the expression latents 644 to determine Gaussian UV map data 662, which includes the identified marker points 664. The "live" frame-by-frame Gaussian UV map data 662 is then sent to a receiving device as part of the receiver phase 608 during a communication session. In some implementations, the receiving device further obtains the skeleton blended data 627 and the skeletal joint data (e.g., animated body pose) to update the Gaussian UV map data 662 during the deformation and blur process of the Gaussian buffering process 670 by applying the body pose data (e.g., neck, shoulders, hands, etc.) to generate the update the Gaussian UV map data 662 as Gaussian buffer data 672. The runtime phase 604 at the receiving device may then obtain the viewpoint data 674 of the receiving device (e.g., a viewpoint to be rendered), and send the Gaussian buffer data 672 and the viewpoint data 674 to a stereo proxy splatting process 680, which generates stereo proxy geometry view data 682 (e.g., a left and right viewpoint of splat data of RGBA and depth data). In some implementations, for more efficient rendering, the stereo proxy geometry view data 682 may be generated at 30 frames-per-second (FPS), but rendered at 90 FPS. The stereo proxy geometry view data 682 may then be used at a 3D Gaussian splatting rendering process (e.g., user representation process 690) for generating the user representation 692.

In some implementations, during a communication session, a level of detail (LOD) may be determined when calling multiple people. In that case, it may be too resource intensive to render full-resolution personas for every person in the communication session. Thus, the system may determine to fall back to lower resolution versions (e.g., with less splats). For example, the system may decode multiple Gaussian UV maps with different resolutions as part of the feature data process 520. Then the receiver may be able to select the correct Gaussian UV map given the current situation based on one or more factors, such as, *inter alia,* distribution of people, viewing directions, and the like.

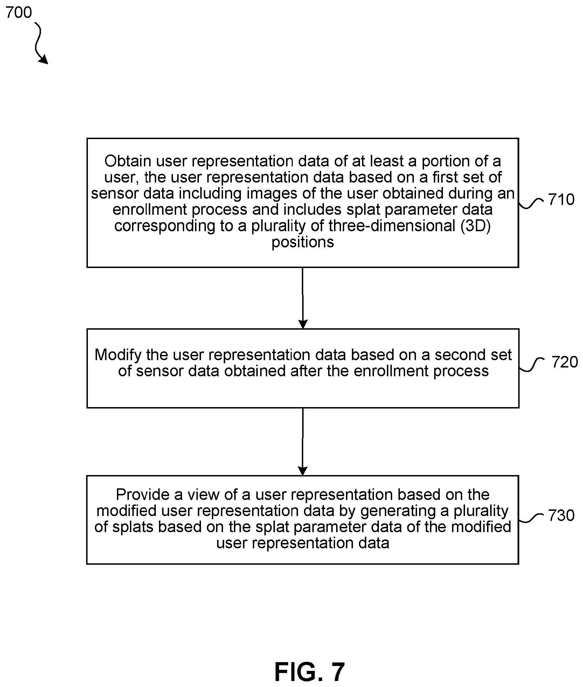

**Figure 7** is a flowchart illustrating an exemplary method 700. In some implementations, a device (e.g., device 105 of Figure 1) performs the techniques of method 700 to generate a view of a representation of a user based on rendering splat parameter data in accordance with some implementations. In some implementations, the techniques of method 700 are performed on a mobile device, desktop, laptop, HMD, or server device. In some implementations, the method 700 is performed on processing logic, including hardware, firmware, software, or a combination thereof. In some implementations, the method 700 is performed on a processor executing code stored in a non-transitory computer-readable medium (e.g., a memory). In some implementations, the method 700 is implemented at a processor of a device, such as a viewing device, that renders the user representation (e.g., device 210 of Figure 2 renders 3D representation 240 of user 260 (a persona) from data obtained from device 265).

At block 710, the method 700, at a processor of a device, obtains user representation data of at least a portion of a user, the user representation data based on a first set of sensor data including images of the user obtained during an enrollment process and includes splat parameter data corresponding to a plurality of 3D positions. In some implementations, the device is a viewing device that renders a user representation (e.g., a persona). For example, as illustrated in Figure 2, the device 210 renders a user representation 240 of the user 260 (e.g., the sender). In some implementations, the at least the portion of the user comprises a face portion and an additional portion of the user (e.g., head, neck, clothes, hair, body, etc.). In some implementations, the images of the user obtained during an enrollment process are two-dimensional (2D) images. Additionally, or alternatively, in some implementations, the images of the user obtained during an enrollment process are 2D images plus depth data.

In some implementations, the user representation data is based on UV maps and 3D point cloud points associated with distribution data defining sizes and shapes for rendering the 3D point cloud points as splats corresponding to each point of the UV maps (e.g., 3D Gaussian map). For example, as illustrated in Figure 6, the user representation 692 is generated for a particular viewpoint based on rendering the points from the Gaussian UV map 662 which combines the obtained splat parameters from enrollment data and updated for each frame based on one or more marker points 664 (e.g., a set of semantic points associated with facial features or other areas corresponding to the sender associated with the rendered user representation 692).

In some implementations, the splat parameter data includes 3D Gaussian parameters for each 3D position. For example, the splat parameter data may include position information, color information, covariance information, transparency information, an orientation, opacity information, extent information in each axis, rotation data, a scale, and semantic information (e.g., skin, hair, cheek, nose, lips, eyebrow, etc.). For example, as illustrated in Figure 6, the Gaussian UV map process 620 generates the 3D Gaussian UV Map data 622 by transforming the enrollment image data to feature data which may include learned feature information of a user obtained from the enrollment images, such as skin, color, and other semantic information per pixel. For example, a splat parameter position may identify where a splat is located based on xyz coordinates, a splat parameter covariance may identify how a splat is stretched/scaled (e.g., a 3x3 matrix), a splat parameter color may identify an RGB color, and a splat parameter alpha (α) may identify how transparent is the splat. In some implementations, the user representation data includes 3D point cloud points associated with distribution data defining sizes and shapes for rendering 3D point cloud points as splats. For example, a splat model generated using Gaussian splats that includes texture/color, position, splat shape, and the like.

In some implementations, the user representation data includes 3D mapping information that includes feature values and position information for each map point. For example, the Gaussian UV map process 620 and the identity latent process 630 may determine 3D point information that includes sufficient information that which splat generation can be generated (e.g., 3D vector projections) and identifies the portions of the user that may need to be updated frame-to-frame (e.g., marker points 664) identified by the identity latent process 630 (e.g., identifying x,y,z positions corresponding to UV coordinates of a UV map).

At block 720, the method 700 modifies the user representation data based on a second set of sensor data obtained after the enrollment process. For example, modifying the splat parameter data based on live sensor data. For example, the splat parameter data may be obtained from a sending device such as from an enrollment process, and the modifications to the enrollment splat parameter data may be based on obtaining live sensor data of the sender in order to determine a live representation of the sender (e.g., a live view of a realistic persona for a communication session). For example, as illustrated in Figure 6C, the receiving device, at the Gaussian UV map process 660, obtains head/face tracking data as expression latents 644 to determine the Gaussian UV map data 662 (e.g., apply live expressions of the user based on the marker points 664 - semantic or feature points (e.g., facial landmarks, corners of the mouth, nose tip, etc.) that are tracked and updated during runtime). Moreover, in some implementations, the receiving device, at the Gaussian buffering process 670, obtains the skeleton blended data 627 and the skeletal joint data (e.g., animated body pose) to update the Gaussian UV map data 662 during the deformation and blur process of the Gaussian buffering process 670 by applying the body pose data (e.g., neck, shoulders, hands, etc.) to generate the update the Gaussian UV map data 662 as Gaussian buffer data 672.

In various implementations, the user representation data may be modified for a face and not the body, for a body and not the face, both the body and face, and/or may be modified either during enrollment, on a sender side device or on a receiver side device. In some implementations, the user representation data is modified based on body pose data obtained during the enrollment process, during a communication session with another device, or a combination thereof. In some implementations, the device is a viewer's device, and the user representation data is modified based on an additional set of sensor data obtained during a communication session with a sender's device associated with the user representation. Alternatively, in some implementations, the user representation data is generated and updated during the enrollment process based on images of a face of the user captured while the user is expressing a plurality of different facial expressions (e.g., enrollment images of the face while the user is smiling, brows raised, cheeks puffed out, etc.).

In some implementations, modifying the user representation data generates 3D Gaussian splats based on the image data for at least the portion of the user, where the Gaussian splats include a texture, a position, and a splat shape. For example, a 3D Gaussian distribution in 2D space with color/density, e.g., parameterization where a face is represented as a 2D grid, and each element of the 2D grid includes a 3D Gaussian splat. In some implementations, a technique generates a user representation via a machine learning model trained using training data obtained via one or more sensors in one or more environments. For example, a machine learning model that interprets the image data and/or other sensor data captured during enrollment.

At block 730, the method 700 provides a view of a user representation based on the modified user representation data by generating a plurality of splats based on the splat parameter data of the modified user representation data. For example, 3D Gaussian splatting may be used to avoid or fill holes, body pose data may be applied to include additional areas of the user (e.g., neck/shoulder area). For example, as illustrated in Figure 6C, the user representation 692 is generated for a particular viewpoint based on rendering the points from the Gaussian UV map 662, which combines the obtained splat parameters from enrollment data, and updated for each frame based on one or more marker points 664 (e.g., a set of semantic points associated with facial features or other areas corresponding to the sender associated with the rendered user representation 692). In some implementations, the system may generate the user representation by applying a delta to a canonical UV map, while in others, the user representation may be generated directly from live data or other forms of an identity representation.

In some implementations, the second set of sensor data obtained after the enrollment process by the device (e.g., a viewer's device) includes a sequence of frames for a Gaussian UV Map and corresponding marker points. The sequence of frames for the Gaussian UV Map and corresponding marker points may be obtained during a communication session from a second device (e.g., a sender's device). The device (e.g., a viewer's device) renders an animated depiction of the user (e.g., a sender) based on the sequence of frames for a Gaussian UV Map and corresponding marker points using one or more splatting techniques described herein. The marker points (e.g., semantic or feature points, such as facial landmarks, corners of the mouth, nose tip, etc.), that are tracked and updated during runtime, may be used in conjunction with a canonical representation and/or with live latents to generate an animated persona.

In some implementations, the identity representation of the user (e.g., a set of identity latents, a canonical Gaussian UV Map, or a combination thereof) and corresponding marker points, are sent during a communication session with a second device, and may be used to render a view of the face (and upper body) of the user (sender). Additionally, or alternatively, sequential frames of face data (appearance of the user's face at different points in time) and body tracking data may be transmitted and used to display a live 3D video-like depiction of the user (e.g., a "live" persona). For example, as illustrated in Figure 6C, the receiving device further obtains the skeleton blended data 627 and the skeletal joint data (e.g., animated body pose) to update the Gaussian UV map data 662 during the deformation and blur process of the Gaussian buffering process 670 by applying the body pose data (e.g., neck, shoulders, hands, etc.) to generate the update the Gaussian UV map data 662 as Gaussian buffer data 672. The runtime phase 604 at the receiving device may then obtain the viewpoint data 674 of the receiving device (e.g., a viewpoint to be rendered), and send the Gaussian buffer data 672 to a stereo proxy splatting process 680, which generates stereo proxy geometry view data 682 (e.g., a left and right viewpoint of splat data of RGBA and depth data). The stereo proxy geometry view data 682 may then be used at a 3D Gaussian splatting rendering process (e.g., user representation process 690) for generating the user representation 692.

In some implementations, the second user representation is based on second image data obtained via a second set of sensors in a second physical environment having a second lighting condition (e.g., different lighting condition than the first physical environment). For example, during an enrollment process, the user representation data is acquired in a particular environment (also referred to herein as an "enrollment environment") that includes some lighting conditions information (e.g., luminance values and other lighting attributes), which may be different lighting data than live lighting data (e.g., two different physical environments between enrollment and during the generation of the persona based on "live" sensor data). In some implementations, the method 700 further includes providing a view of the user representation in a 3D environment. In some implementations, the method 700 further includes modifying the view of the user representation by adjusting the user representation based on at least one color attribute of a plurality of color attributes of an environment, at least one light attribute of a plurality of light attributes of the environment, or a combination thereof. For example, adjusting a color or lighting on the user representation, such as the hair, face, clothing, and the like, based on a color and/or light associated with the viewer's environment and/or with the sender's environment. In other words, the lighting and/or color of a 3D representation (e.g., persona) may be altered to match the lighting and/or color of a viewer's environment (e.g., a reddish hue of light shining in a viewer's room would be reflected on the 3D representation). Alternatively, the lighting and/or color of a 3D representation (e.g., persona) may be altered to match the lighting and/or color of a sender's environment (e.g., a greenish hue of light shining in a sender's room would be reflected on the 3D representation to a viewer, even though the enrollment data did not reflect the greenish hue of light).

In some implementations, the user representation data of at least a portion of a user that is obtained during an enrollment process is based on images of a face of the user captured in different poses, and/or while the user is expressing a plurality of different facial expressions. For example, the images are enrollment images of the face while the user is facing toward the camera, to the left of the camera, and to the right of the camera, and/or while the user is smiling, brows raised, cheeks puffed out, etc. In some implementations, the first set of sensor data corresponds to only a first area of the user (e.g., parts not obstructed by the device, such as an HMD), and the second set of sensor data corresponds to a second area including a third area different than the first area. For example, a second area may include some of the parts obstructed by an HMD when it is being worn by the user. For example, during an enrollment process, a larger portion of a user may be captured by image data (e.g., not wearing the HMD), than during a live communication session with the user wearing the HMD.

In some implementations, as illustrated in Figure 2, the rendering occurs during a communication session in which a second device (e.g., device 265) captures sensor data (e.g., image data of user 260 and a portion of the environment 250) and provides a sequence of frame-specific 3D representations corresponding to the multiple instants in the period time based on the sensor data. For example, the second device 265 provides/transmits the sequence of frame-specific 3D representations to device 210, and device 210 generates the combined 3D representation to display a live 3D video-like face depiction (e.g., a realistic moving persona) of the user 260 (e.g., representation 240 of user 260). Alternatively, in some implementations, the second device provides the 3D representation of the user (e.g., representation 140 of user 260) during the communication session (e.g., a realistic moving persona). For example, the combined representation is determined at device 265 and sent to device 210. In some implementations, the views of the 3D representations are displayed on the device (e.g., device 210) in real-time relative to the multiple instants in the period of time. For example, the depiction of the user is displayed in real-time and based on live lighting data (e.g., a persona shown to a second user on a display of a second device of the second user).

In some implementations, the view of the user representation may include sufficient data to enable a stereo view of the user (e.g., left/right eye views) such that the face may be perceived with depth. In one implementation, a depiction of a face includes a 3D model of the face and views of the representation from a left eye position and a right eye position and are generated to provide a stereo view of the face.

In some implementations, certain parts of the face that may be of importance to conveying a realistic or honest appearance, such as the eyes and mouth, may be generated differently than other parts of the face (e.g., based on marker points). For example, parts of the face that may be of importance to conveying a realistic or honest appearance may be based on current camera data while other parts of the face may be based on previously-obtained (e.g., enrollment) face data.

In some implementations, a representation of a face is generated with texture, color, and/or geometry for various face portions identifying an estimate of how confident the generation technique is that such textures, colors, and/or geometries accurately correspond to the real texture, color, and/or geometry of those face portions based on the depth values and appearance values each frame of data. In some implementations, the depiction is a 3D persona. For example, the representation is a 3D model that represents the user (e.g., user 110 of Figure 1).

In some implementations, the first set of sensor data and/or the second set of sensor data (e.g., live data, such as video content that includes light intensity data (RGB) and depth data), is associated with a point in time, such as images from inward/down facing sensors while the user is wearing an HMD associated with a frame. In some implementations, the sensor data includes depth data (e.g., infrared, time-of-flight, etc.) and light intensity image data obtained during a scanning process.

In some implementations, obtaining the first set of sensor data during an enrollment process may include obtaining enrollment sensor data corresponding to features (e.g., texture, muscle activation, shape, depth, etc.) of a face of a user in a plurality of configurations from a device (e.g., enrollment image data 610 of Figure 6). In some implementations, the first set of data includes unobstructed image data of the face of the user. For example, images of the face may be captured while the user is smiling, brows raised, cheeks puffed out, etc. In some implementations, enrollment data may be obtained by a user taking the device (e.g., an HMD) off and capturing images without the device occluding the face or using another device (e.g., a mobile device) without the device (e.g., HMD) occluding the face. In some implementations, the enrollment data (e.g., the first set of data) is acquired from light intensity images (e.g., RGB image(s)). The enrollment data may include textures, muscle activations, etc., for most, if not all, of the user's face. In some implementations, the enrollment data may be captured while the user is provided different instructions to acquire different poses of the user's face. For example, the user may be instructed by a user interface guide to "raise your eyebrows," "smile," "frown," etc., in order to provide the system with a range of facial features for an enrollment process.

In some implementations, the method 700 may be repeated for each frame captured during each instant/frame of a live communication session or other experience. For example, for each iteration, while the user is using the device (e.g., wearing the HMD), the method 700 may involve continuously obtaining live sensor data (e.g., face tracking data, body tracking, and the like), and for each frame, updating the displayed portions of the user representation based on the updated Gaussian UV map and marker points using a GPU Gaussian buffer. For example, for each new frame, the system can update the display of the 3D persona based on the new data.

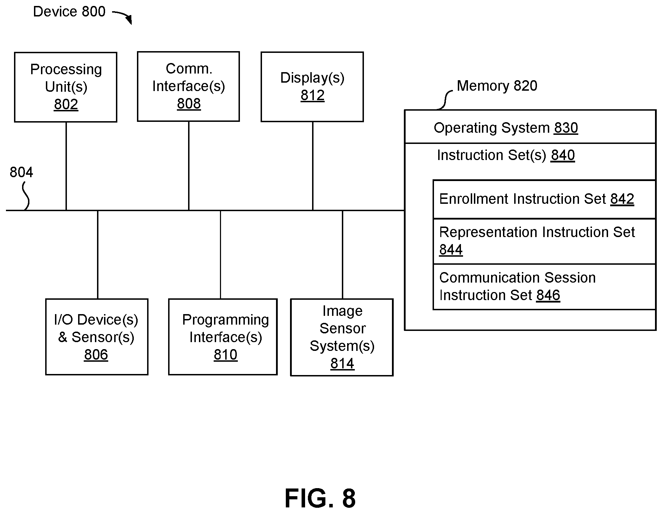

**Figure 8** is a block diagram of an example device 800. Device 800 illustrates an exemplary device configuration for devices described herein (e.g., device 105, 210, 265, etc.). While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 800 includes one or more processing units 802 (e.g., microprocessors, ASICs, FPGAs, GPUs, CPUs, processing cores, and/or the like), one or more input/output (I/O) devices and sensors 806, one or more communication interfaces 808 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 810, one or more displays 812, one or more interior and/or exterior facing image sensor systems 814, a memory 820, and one or more communication buses 804 for interconnecting these and various other components.

In some implementations, the one or more communication buses 804 include circuitry that interconnects and controls communications between system components. In some implementations, the one or more I/O devices and sensors 806 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more displays 812 are configured to present a view of a physical environment or a graphical environment to the user. In some implementations, the one or more displays 812 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 812 correspond to diffractive, reflective, polarized, holographic, etc. waveguide displays. In one example, the device 10 includes a single display. In another example, the device 10 includes a display for each eye of the user.

In some implementations, the one or more image sensor systems 814 are configured to obtain image data that corresponds to at least a portion of the physical environment 102. For example, the one or more image sensor systems 814 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 814 further include illumination sources that emit light, such as a flash. In various implementations, the one or more image sensor systems 814 further include an on-camera image signal processor (ISP) configured to execute a plurality of processing operations on the image data.

The memory 820 includes high-speed random-access memory, such as DRAM, SRAM, DDR RAM, or other random-access solid-state memory devices. In some implementations, the memory 820 includes non-volatile memory, such as one or more magnetic disk storage devices, optical disk storage devices, flash memory devices, or other non-volatile solid-state storage devices. The memory 820 optionally includes one or more storage devices remotely located from the one or more processing units 802. The memory 820 includes a non-transitory computer readable storage medium.

In some implementations, the memory 820 or the non-transitory computer readable storage medium of the memory 820 stores an optional operating system 830 and one or more instruction set(s) 840. The operating system 830 includes procedures for handling various basic system services and for performing hardware dependent tasks. In some implementations, the instruction set(s) 840 include executable software defined by binary information stored in the form of electrical charge. In some implementations, the instruction set(s) 840 are software that is executable by the one or more processing units 802 to carry out one or more of the techniques described herein.

The instruction set(s) 840 include an enrollment instruction set 842, representation instruction set 844, and a communication session instruction set 846. The instruction set(s) 840 may be embodied a single software executable or multiple software executables.

In some implementations, the enrollment instruction set 842 is executable by the processing unit(s) 802 to generate enrollment data from image data. The enrollment instruction set 842 may be configured to provide instructions to the user in order to acquire image information to generate the enrollment personification (e.g., enrollment data 510) and determine whether additional image information is needed to generate an accurate enrollment personification to be used by the persona display process. To these ends, in various implementations, the instruction includes instructions and/or logic therefor, and heuristics and metadata therefor.

In some implementations, the representation instruction set 844 is executable by the processing unit(s) 802 to generate a representation of the user (e.g., Gaussian splatting) based on the enrollment data by using one or more of the techniques discussed herein or as otherwise may be appropriate. To these ends, in various implementations, the instruction includes instructions and/or logic therefor, and heuristics and metadata therefor.

In some implementations, the communication session instruction set 846 is executable by the processing unit(s) 802 to facilitate a communication session between two or more electronic devices (e.g., device 210 and device 265 as illustrated in Figure 2) using one or more of the techniques discussed herein or as otherwise may be appropriate. To these ends, in various implementations, the instruction includes instructions and/or logic therefor, and heuristics and metadata therefor.

Although the instruction set(s) 840 are shown as residing on a single device, it should be understood that in other implementations, any combination of the elements may be located in separate computing devices. Moreover, Figure 8 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

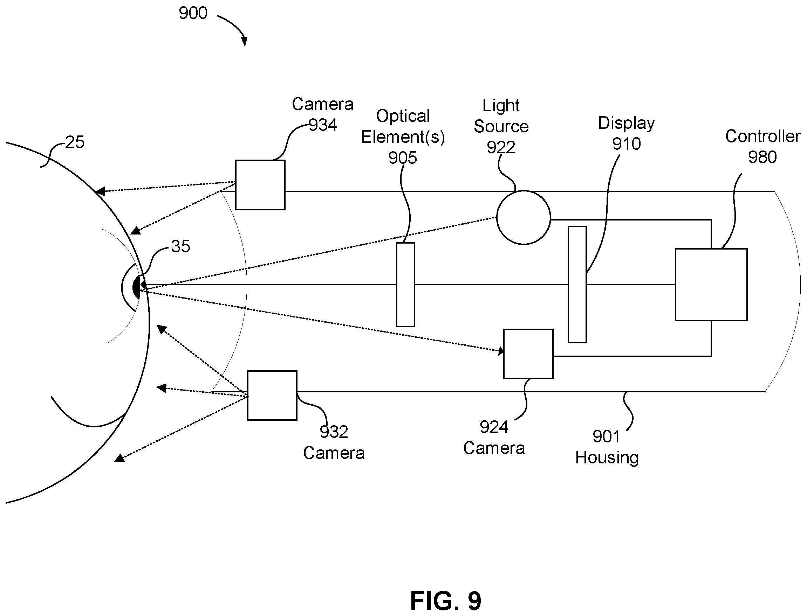

**Figure 9** illustrates a block diagram of an exemplary head-mounted device 900 in accordance with some implementations. The head-mounted device 900 includes a housing 901 (or enclosure) that houses various components of the head-mounted device 900. The housing 901 includes (or is coupled to) an eye pad (not shown) disposed at a proximal (to the user 25) end of the housing 901. In various implementations, the eye pad is a plastic or rubber piece that comfortably and snugly keeps the head-mounted device 900 in the proper position on the face of the user 25 (e.g., surrounding the eye 35 of the user 25).

The housing 901 houses a display 910 that displays an image, emitting light towards or onto the eye of a user 25. In various implementations, the display 910 emits the light through an eyepiece having one or more optical elements 905 that refracts the light emitted by the display 910, making the display appear to the user 25 to be at a virtual distance farther than the actual distance from the eye to the display 910. For example, optical element(s) 905 may include one or more lenses, a waveguide, other diffraction optical elements (DOE), and the like. For the user 25 to be able to focus on the display 910, in various implementations, the virtual distance is at least greater than a minimum focal distance of the eye (e.g., 7 cm). Further, in order to provide a better user experience, in various implementations, the virtual distance is greater than 1 meter.

The housing 901 also houses a tracking system including one or more light sources 922, camera 924, camera 932, camera 934, and a controller 980. The one or more light sources 922 emit light onto the eye of the user 25 that reflects as a light pattern (e.g., a circle of glints) that can be detected by the camera 924. Based on the light pattern, the controller 980 can determine an eye tracking characteristic of the user 25. For example, the controller 980 can determine a gaze direction and/or a blinking state (eyes open or eyes closed) of the user 25. As another example, the controller 980 can determine a pupil center, a pupil size, or a point of regard. Thus, in various implementations, the light is emitted by the one or more light sources 922, reflects off the eye of the user 25, and is detected by the camera 924. In various implementations, the light from the eye of the user 25 is reflected off a hot mirror or passed through an eyepiece before reaching the camera 924.

The display 910 emits light in a first wavelength range and the one or more light sources 922 emit light in a second wavelength range. Similarly, the camera 924 detects light in the second wavelength range. In various implementations, the first wavelength range is a visible wavelength range (e.g., a wavelength range within the visible spectrum of approximately 400-700 nm) and the second wavelength range is a near-infrared wavelength range (e.g., a wavelength range within the near-infrared spectrum of approximately 700-1400 nm).

In various implementations, eye tracking (or, in particular, a determined gaze direction) is used to enable user interaction (e.g., the user 25 selects an option on the display 910 by looking at it), provide foveated rendering (e.g., present a higher resolution in an area of the display 910 the user 25 is looking at and a lower resolution elsewhere on the display 910), or correct distortions (e.g., for images to be provided on the display 910). In various implementations, the one or more light sources 922 emit light towards the eye 35 of the user 25 which reflects in the form of a plurality of glints.

In various implementations, the camera 924 is a frame/shutter-based camera that, at a particular point in time or multiple points in time at a frame rate, generates an image of the eye 35 of the user 25. Each image includes a matrix of pixel values corresponding to pixels of the image which correspond to locations of a matrix of light sensors of the camera. In implementations, each image is used to measure or track pupil dilation by measuring a change of the pixel intensities associated with one or both of a user's pupils.

In various implementations, the camera 924 is an event camera including a plurality of light sensors (e.g., a matrix of light sensors) at a plurality of respective locations that, in response to a particular light sensor detecting a change in intensity of light, generates an event message indicating a particular location of the particular light sensor.

In various implementations, the camera 932 and camera 934 are frame/shutter-based cameras that, at a particular point in time or multiple points in time at a frame rate, can generate an image of the face of the user 25. For example, camera 932 captures images of the user's face below the eyes, and camera 934 captures images of the user's face above the eyes. The images captured by camera 932 and camera 934 may include light intensity images (e.g., RGB) and/or depth image data (e.g., Time-of-Flight, infrared, etc.).

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

As described above, one aspect of the present technology is the gathering and use of physiological data to improve a user's experience of an electronic device with respect to interacting with electronic content. The present disclosure contemplates that in some instances, this gathered data may include personal information data that uniquely identifies a specific person or can be used to identify interests, traits, or tendencies of a specific person. Such personal information data can include physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve interaction and control capabilities of an electronic device. Accordingly, use of such personal information data enables calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access his or her stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods, apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various objects, these objects should not be limited by these terms. These terms are only used to distinguish one object from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "or" as used herein refers to and encompasses any and all possible combinations of one or more of the associated listed items. It will be further understood that the terms "comprises" or "comprising," when used in this specification, specify the presence of stated features, integers, steps, operations, objects, or components, but do not preclude the presence or addition of one or more other features, integers, steps, operations, objects, components, or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws.

It is to be understood that the implementations shown and described herein are only illustrative of the principles of the present invention and that various modification may be implemented by those skilled in the art without departing from the scope and spirit of the invention.

Exemplary embodiments are set out in the following items:
1. A method comprising:
   at a processor of a device:
   obtaining user representation data of at least a portion of a user, wherein the user representation data is based on a first set of sensor data comprising images of the user obtained during an enrollment process and the user representation data comprises splat parameter data corresponding to a plurality of three-dimensional (3D) positions;
   modifying the user representation data based on a second set of sensor data obtained after the enrollment process; and
   providing a view of a user representation based on the modified user representation data, wherein providing the view comprises generating a plurality of splats based on the splat parameter data of the modified user representation data.
2. The method of item 1, wherein the at least the portion of the user comprises a face portion and an additional portion of the user.
3. The method of items 1 or 2, wherein the user representation data is based on UV maps and 3D point cloud points associated with distribution data defining sizes and shapes for rendering the 3D point cloud points as splats corresponding to each point of the UV maps.
4. The method of any of the items 1-3, wherein the splat parameter data comprises 3D Gaussian parameters for each 3D position.
5. The method of item 4, wherein the 3D Gaussian parameters comprises at least one of position information, color information, covariance information, transparency information, an orientation, opacity information, extent information in each axis, rotation data, a scale, and semantic information.
6. The method of any of the items 1-5, wherein the user representation data comprises 3D mapping information that includes feature values and position information for each map point.
7. The method of any of the items 1-6, wherein the user representation data is modified based on body pose data obtained during the enrollment process, during a communication session with another device, or a combination thereof.
8. The method of any of the items 1-7, wherein the device is a viewer's device, wherein the user representation data is modified based on an additional set of sensor data obtained during a communication session with a sender's device associated with the user representation.
9. The method of any of the items 1-8, wherein the user representation data is generated and updated during the enrollment process based on images of a face of the user captured while the user is expressing a plurality of different facial expressions.
10. The method of any of the items 1-9, wherein a technique generates the user representation data via a machine learning model trained using training data obtained via one or more sensors in one or more environments.
11. The method of any of the items 1-10, wherein providing the view of the user representation based on the modified user representation data comprises displaying the user representation an extended reality (XR) environment.
12. The method of any of the items 1-11, further comprising:
   modifying the view of the user representation by adjusting the user representation based on at least one color attribute of a plurality of color attributes of an environment, at least one light attribute of a plurality of light attributes of the environment, or a combination thereof.
13. The method of any of the items 1-12, wherein the user representation data is obtained in a first physical environment, and the user representation is displayed in a view of a second physical environment that is different than the first physical environment.
14. The method of any of the items 1-13, wherein the user representation is a 3D user representation.
15. A device comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform operations comprising:
      obtaining user representation data of at least a portion of a user, wherein the user representation data is based on a first set of sensor data comprising images of the user obtained during an enrollment process and the user representation data comprises splat parameter data corresponding to a plurality of three-dimensional (3D) positions;
      modifying the user representation data based on a second set of sensor data obtained after the enrollment process; and
      providing a view of a user representation based on the modified user representation data, wherein providing the view comprises generating a plurality of splats based on the splat parameter data of the modified user representation data.
16. The device of item 15, wherein the user representation data is based on UV maps and 3D point cloud points associated with distribution data defining sizes and shapes for rendering the 3D point cloud points as splats corresponding to each point of the UV maps.
17. The device of any of the items 15-16, wherein the splat parameter data comprises 3D Gaussian parameters for each 3D position, wherein the 3D Gaussian parameters comprises at least one of position information, color information, covariance information, transparency information, an orientation, opacity information, extent information in each axis, rotation data, a scale, and semantic information.
18. The device of any of the items 15-17, wherein the user representation data is modified based on body pose data obtained during the enrollment process, during a communication session with another device, or a combination thereof.
19. The device of any of the items 15-18, wherein the device is a viewer's device, wherein the user representation data is modified based on an additional set of sensor data obtained during a communication session with a sender's device associated with the user representation.
20. A non-transitory computer-readable storage medium, storing program instructions executable on a device to perform operations comprising:
   obtaining user representation data of at least a portion of a user, wherein the user representation data is based on a first set of sensor data comprising images of the user obtained during an enrollment process and the user representation data comprises splat parameter data corresponding to a plurality of three-dimensional (3D) positions;
   modifying the user representation data based on a second set of sensor data obtained after the enrollment process; and
   providing a view of a user representation based on the modified user representation data, wherein providing the view comprises generating a plurality of splats based on the splat parameter data of the modified user representation data.
21. A device comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform operations comprising any of the methods of items 1-14.
22. A non-transitory computer-readable storage medium, storing program instructions executable on a device to perform operations comprising any of the methods of items 1-14.

## Claims

1. A method comprising:
at a processor of a device:
obtaining user representation data of at least a portion of a user, wherein the user representation data is based on a first set of sensor data comprising images of the user obtained during an enrollment process and the user representation data comprises splat parameter data corresponding to a plurality of three-dimensional (3D) positions;
modifying the user representation data based on a second set of sensor data obtained after the enrollment process; and
providing a view of a user representation based on the modified user representation data, wherein providing the view comprises generating a plurality of splats based on the splat parameter data of the modified user representation data.

2. The method of claim 1, wherein the at least the portion of the user comprises a face portion and an additional portion of the user.

3. The method of claims 1 or 2, wherein the user representation data is based on UV maps and 3D point cloud points associated with distribution data defining sizes and shapes for rendering the 3D point cloud points as splats corresponding to each point of the UV maps.

4. The method of any of the claims 1-3, wherein the splat parameter data comprises 3D Gaussian parameters for each 3D position.

5. The method of claim 4, wherein the 3D Gaussian parameters comprises at least one of position information, color information, covariance information, transparency information, an orientation, opacity information, extent information in each axis, rotation data, a scale, and semantic information.

6. The method of any of the claims 1-5, wherein the user representation data comprises 3D mapping information that includes feature values and position information for each map point.

7. The method of any of the claims 1-6, wherein the user representation data is modified based on body pose data obtained during the enrollment process, during a communication session with another device, or a combination thereof.

8. The method of any of the claims 1-7, wherein the device is a viewer's device, wherein the user representation data is modified based on an additional set of sensor data obtained during a communication session with a sender's device associated with the user representation.

9. The method of any of the claims 1-8, wherein the user representation data is generated and updated during the enrollment process based on images of a face of the user captured while the user is expressing a plurality of different facial expressions.

10. The method of any of the claims 1-9, wherein a technique generates the user representation data via a machine learning model trained using training data obtained via one or more sensors in one or more environments.

11. The method of any of the claims 1-10, wherein providing the view of the user representation based on the modified user representation data comprises displaying the user representation an extended reality (XR) environment.

12. The method of any of the claims 1-11, further comprising:
modifying the view of the user representation by adjusting the user representation based on at least one color attribute of a plurality of color attributes of an environment, at least one light attribute of a plurality of light attributes of the environment, or a combination thereof.

13. The method of any of the claims 1-12, wherein the user representation data is obtained in a first physical environment, and the user representation is displayed in a view of a second physical environment that is different than the first physical environment.

14. A device comprising:
a non-transitory computer-readable storage medium; and
one or more processors coupled to the non-transitory computer-readable storage medium, wherein the non-transitory computer-readable storage medium comprises program instructions that, when executed on the one or more processors, cause the one or more processors to perform operations comprising any of the methods of claims 1-13.

15. A non-transitory computer-readable storage medium, storing program instructions executable on a device to perform operations comprising any of the methods of claims 1-13.
